# EUROPÄISCHE PATENTSCHRIFT

(11) **EP 0 842 357 B1**
(45) Veröffentlichungstag und Bekanntmachung des Hinweises auf die Patenterteilung: **03.03.1999**
(21) Anmeldenummer: 96932431.8
(22) Anmeldetag: 30.07.1996
(51) Int. Cl.: F02F 11/00, F16J 15/32

(54) **STATISCHE DICHTUNG FÜR BRENNKRAFTMASCHINEN, INSBESONDERE VERSCHLUSSDECKEL FÜR KURBELWELLEN- UND GETRIEBEGEHÄUSE**
STATIC SEAL FOR INTERNAL COMBUSTION ENGINES, IN PARTICULAR CLOSURE COVER FOR CRANKSHAFT AND GEARBOX HOUSINGS
GARNITURE D'ETANCHEITE STATIQUE POUR MOTEURS A COMBUSTION INTERNE, NOTAMMENT COUVERCLE DE FERMETURE POUR CARTER DE VILEBREQUIN ET DE BOITE

(30) Priorität: 02.08.1995 DE 19528379
(43) Veröffentlichungstag der Anmeldung: 20.05.1998
(73) Patentinhaber: Ford-Werke Aktiengesellschaft, 50735 Köln (DE); CR Elastomere GmbH, 51379 Leverkusen (DE)
(72) Erfinder: WEITZ, Klaus-Peter, D-42657 Solingen (DE); OLBRICHT, Helmut, D-42329 Wuppertal (DE)
(74) Vertreter: Glanz, Werner
(86) Internationale Anmeldenummer: DE9601446
(87) Internationale Veröffentlichungsnummer: WO9705374

(56) Entgegenhaltungen:
- DE-C- 3 927 340
- DE-C- 3 927 341
- DE-C- 4 224 995
- US-A- 4 688 752

## Beschreibung

Die Erfindung betrifft eine statische Dichtung für Brennkraftmaschinen, insbesondere Verschlußdeckel für Kurbel- und Getriebegehäuse, bestehend aus einem mit Löchern für die Aufnahme von Befestigungsschrauben versehenen Grundkörper aus Metall oder dgl. sowie auf diesem z.B. durch Vulkanisieren oder dgl. befestigten Dichtstreifen, wobei diese Dichtstreifen an der der Flanschfläche des Gehäuses benachbarten Stirnseite mit mindestens einem axial in Richtung einer Flanschfläche des Gehäuses vorstehenden Steg sowie Ausnehmungen versehen sind.

Solche Dichtungen werden zum lösbaren, flüssigkeitsdichten Befestigen von Gehäusen, wie Ölwannen oder Ventildeckeln, am Motorblock oder bei Verschlußdeckeln von Kurbelwellen- und Getriebegehäusen verwendet. Im Fall der Abdichtung eines Kurbelwellengehäuses besteht der Gehäuseverschlußdeckel aus einer dynamischen Dichtung für die durch den Deckel sich erstreckende Kurbelwelle, wobei die dynamische Dichtung aus mindestens einer gegebenenfalls federbelasteten, elastischen, anvulkanisierten Dichtlippe besteht, sowie zwei unter einem Winkel von üblicherweise 90 Grad aufeinandertreffenden, statisch abzudichtenden Flanschflächen, deren eine sich radial zur Kurbelwellenachsrichtung erstreckt und zur dichten Verbindung mit dem Kurbelwellengehäuse dient und deren andere sich in Kurbelwellenachsrichtung erstreckt und zur dichten Verbindung mit der Ölwanne vorgesehen ist, wobei für die statische Abdichtung beider Flanschflächen in Kurbelwellenachsrichtung beziehungsweise radial dazu aus den Flanschflächen hervortretende Dichtstreifen vorgesehen sind.

Durch die DE-A-36 34 735 ist ein Gehäuseverschlußdeckel bekannt, der aus einem topfförmig gezogenen Blechkörper besteht, der zur Abdichtung der Kurbelwelle einen dynamisch belasteten Dichtungsring aus elastomerem Werkstoff sowie statisch wirkende Dichtstreifen, ebenfalls aus elastomerem Werkstoff, die einstückig ineinander übergehen, aufweist. Zur Abdichtung der von unten gegen das Kurbelwellengehäuse verschraubbaren Ölwanne dient ein Dichtstreifen, welcher aus der axialen Flanschfläche heraustritt. Im Gehäuseverschlußdeckel sind zwei Muttern eingeschweißt, so daß beim Anschrauben der Ölwanne der Dichtstreifen zwischen Gehäusedeckel und Ölwanne mit ausreichender Flächenpressung zusammengedrückt werden kann, um so eine Dichtheit zu erzeugen.

Durch die DE-A-39 27 341 sind Gummiformdichtungen für Brennkraftmaschinen bekannt, bei denen auf dem aus Metall oder dgl. gefertigten Grundkörper Dichtstreifen befestigt sind, wobei diese an der der Flanschfläche des Gehäuses benachbarten Stirnseite mit mindestens einem axial in Richtung einer Flanschfläche des Gehäuses vorstehenden Steg sowie mit Ausnehmungen versehen sind, in die das Material der Vorsprünge der Dichtungen beim Einbau ausweichen kann.

Für eine einwandfreie Abdichtung sind hohe Oberflächengenauigkeiten der den Dichtstreifen gegenüberliegenden Gehäuseflächen erforderlich, was sich sehr stark auf die Herstell- und Bearbeitungskosten auswirkt. Es stellen dabei nicht nur die Makrounebenheiten der Oberflächen, sondern auch die Mikrorauheiten, Poren, Stufenübergänge u. dgl. besondere Anforderungen an eine einwandfreie Abdichtung. Hinzu kommt noch, daß im Betrieb mit der Zeit Hitzerisse und Riefen an den Dichtstreifen auftreten können, die die Dichtwirkung langfristig beeinträchtigen.

Der Erfindung liegt die Aufgabe zugrunde, eine gattungsgemäße Dichtung so zu verbessern, daß einerseits die Bearbeitungskosten für die Gegenflächen wesentlich verringert werden können oder eine Bearbeitung sogar ganz entfallen kann und andererseits die Dichtwirkung noch weiter verbessert und auch langfristig gewährleistet wird.

Diese Aufgabe wird erfindungsgemäß dadurch gelöst, daß in die Ausnehmungen der Dichtstreifen ein plastisch verformbares Dichtmittel eingebracht ist, das erst unter dem Einfluß von Druck in einen Fließzustand übergeht und sich über die Dichtflächen verteilt.

Als Dichtmittel kann nach weiteren Merkmalen der Erfindung Wachs, Dichtungslack o.ä. Verwendung finden.

Dieses Dichtmittel, das bereits vor dem Einbau in einem quasi verfestigten Zustand in die Ausnehmungen in dem Dichtstreifen eingebracht ist, wird bei der Befestigung des Deckels oder dgl. unter dem Druck beim Befestigen zum Fließen gebracht und einerseits über den Dichtstreifen verteilt und schützt dessen Oberfläche und andererseits über die rauhe oder unebene Oberfläche der Flanschfläche des Gehäuses verteilt, dringt in die Unebenheiten, Poren oder Ausnehmungen der Flanschfläche ein und füllt diese aus.

Um die Aufnahme und Halterung des Dichtmittels bis zum Einbau sowie die Verteilung des Dichtmittels beim Einbau der Dichtung zu verbessern, wird nach einem weiteren Merkmal der Erfindung vorgeschlagen, die Dichtstreifen zur Bildung der Ausnehmungen an der Stirnseite mit einem sägezahnförmigen Profil mit mindestens einer schräg verlaufenden Seitenflanke auszubilden und das Dichtmittel in der oder den vom sägezahnförmigen Profil und der Flanschfläche des Gehäuses gebildeten Ausnehmung(en) einzubringen. Durch diese Maßnahme wird ein Austreten des Dichtmittels im Anlieferungszustand weitestgehend vermieden und bei der Befestigung des Deckels das Dichtmittel durch die Keilwirkung in die gewünschte Richtung gedrückt, um die Unebenheiten der Flanschfläche auszufüllen.

Nach der Erfindung werden also nicht nur die Makrounebenheiten der Gehäuse- und Flanschflächen vom elastomeren Werkstoff der Dichtstreifen elastisch ausgefüllt und abgedichtet, sondern auch die Mikrorauheiten, Stufenübergänge, Poren und dgl. durch das plastisch verformbare Dichtmittel gefüllt und abgedichtet.

Durch die Erfindung, die nachstehend noch näher an Hand von Ausführungsbeispielen beschrieben werden soll, ist also einerseits eine wesentliche Verbesserung der Dichtwirkung erreichbar, während andererseits eine genaue Bearbeitung der Flanschflächen entfallen kann, wodurch die Herstellungs- und Bearbeitungskosten nicht unwesentlich gesenkt werden können.

Die Erfindung ist anhand von Ausführungsbeispielen in der Zeichnung dargestellt und wird im folgenden näher erläutert.

Es zeigen:
- Figur 1: die Vorderansicht eines erfindungsgemäßen Gehäuseverschlußdeckels,
- Figur 2: die Seitenansicht gemäß Schnitt II-II noch vor dem Festziehen der Befestigungsschrauben und
- Figur 3: die Seitenansicht gemäß Schnitt II-II jedoch mit geänderter Ausführung des Dichtstreifens.

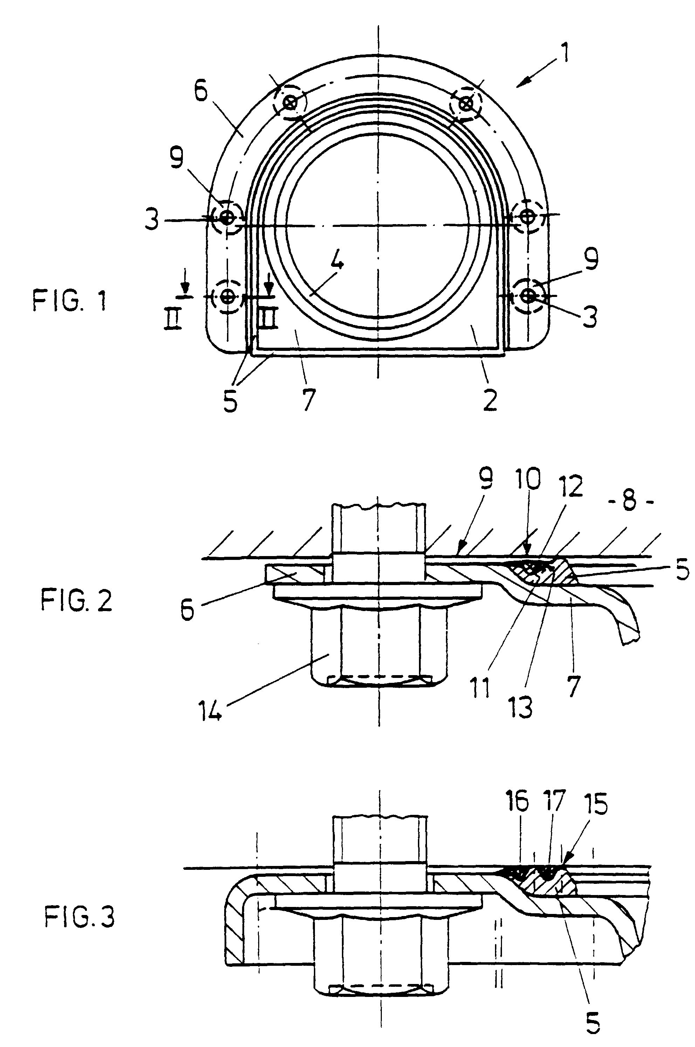

Der in der Figur 1 dargestellte Gehäuseverschlußdeckel 1 dient zur Abdichtung eines Kurbelwellengehäuses der Brennkraftmaschine eines Kraftfahrzeuges. Der Gehäuseverschlußdeckel 1 besteht aus einem profilgezogenen Blechkörper 2 mit im wesentlichen topfförmigem Querschnitt und axial zueinander versetzt angeordneten Radialflächen 6, 7 (Figur 2), wobei die Bodenfläche 6 des Blechkörpers 2 zur Verbindung mit dem Kurbelwellengehäuse 8 Schrauben-Durchgangsbohrungen 3 aufweist und die Radialfläche 7 zur Aufnahme eines statisch wirkenden Dichtstreifen 5 dient. Zur Abdichtung der nicht gezeichneten Kurbelwelle ist eine Lippendichtung 4 am Blechkörper 2 anvulkanisiert.

Wie aus Figur 2 ersichtlich, ist der Dichtstreifen 5 an der der Flanschfläche 9 des Kurbelwellengehäuses 8 gegenüberliegenden Stirnseite 10 so profiliert, daß eine Ausnehmung 11 entsteht, die zur Aufnahme eines plastisch verformbaren Dichtmittels 12 dient. Die eine Seitenflanke 13 der Ausnehmung 11 im Dichtstreifen 5 ist geneigt ausgebildet. Beim Anzug der Befestigungsschraube 14 wird der Dichtstreifen 5 verformt und das in der Ausnehmung 11 befindliche Dichtmittel 12 in einen Fließzustand gebracht. Die geneigte Seitenflanke 13 der Ausnehmung 11 bewirkt ein Fließen des Dichtmittels 12 sowohl längs der Seitenflanke 13 als auch in Richtung auf die Befestigungsschraube 14 zu, so daß der gesamte Raum zwischen der Radialfläche 6 und dem Dichtstreifen 5 sowie der Flanschfläche 9 des Kurbelwellengehäuses ausgefüllt wird.

Beim Ausführungsbeispiel nach Figur 3 ist der Dichtstreifen 5 mit einem sägezahnförmigen Profil 15 versehen. Die einzelnen Ausnehmungen 16, 17 sind mit Dichtmittel 12 gefüllt.

## Patentansprüche

1. Statische Dichtung für Brennkraftmaschinen, insbesondere für Verschlußdeckel an Kurbelwellen- und Getriebegehäusen, bestehend aus einem mit Löchern für die Aufnahme von Befestigungsschrauben versehenen Grundkörper aus Metall oder dgl. sowie auf diesem z. B. durch Vulkanisieren oder dgl. befestigten Dichtstreifen, wobei diese Dichtstreifen an der der Flanschfläche (9) des Gehäuses (8) benachbarten Stirnseite (10) mit mindestens einem axial in Richtung einer Flanschfläche des Gehäuses vorstehenden Steg sowie Ausnehmungen (11, 16, 17) versehen sind, dadurch gekennzeichnet, daß in die Ausnehmungen (11, 16, 17) ein plastisch verformbares Dichtmittel (12) eingebracht ist, das erst unter dem Einfluß von Druck in einen Fließzustand übergeht und sich über die Dichtflächen verteilt.

2. Statische Dichtung nach Anspruch 1, dadurch gekennzeichnet, daß die Dichtstreifen (5) zur Bildung der Ausnehmungen (11, 16, 17) an der Stirnseite (10) ein sägezahnförmiges Profil (15) mit mindestens einer schräg verlaufenden Seitenflanke (13) aufweisen und daß das Dichtmittel (12) in der oder den vom sägezahnförmigen Profil (15) und der Flanschfläche (9) des Gehäuses (8) gebildeten Ausnehmung(en) (11, 16, 17) eingebracht ist.

3. Statische Dichtung nach einem der Ansprüche 1 oder 2, gekennzeichnet durch die Verwendung von Wachs als Dichtmittel.

4. Statische Dichtung nach einem der Ansprüche 1 oder 2, gekennzeichnet durch die Verwendung von Dichtlack als Dichtmittel.

## Claims

1. Static seal for internal combustion engines, especially for closure covers for crankshaft and gearbox housings, consisting of a basic body, made of metal or the like and provided with holes for receiving fastening screws, as well as sealing strips fastened to said basic body, e.g. by vulcanising or the like, these sealing strips being provided on the end face (10) adjacent to the flange surface (9) of the housing (8) with at least one web protruding axially in the direction of a flange surface of the housing as well as with recesses (11, 16, 17), characterised in that a plastically deformable sealing agent (12) is introduced into the recesses (11, 16, 17) which only becomes fluid unter the influence of pressure and distributes itself over the seal surfaces.

2. Static seal according to claim 1, characterised in that the sealing strips (5) to form the recesses (11, 16, 17) on the end face (10) have a serrated profile (15) with at least one side flank (13) running obliquely and in that the sealing agent (12) is introduced in the recess or recesses (11, 16, 17) formed by the serrated profile (15) and the flange surface (9) of the housing (8).

3. Static seal according to one of claims 1 or 2, characterised by the use ofwax as a sealing agent.

4. Static seal according to one of claims 1 or 2, characterised by the use of sealing lacquer as a sealing agent.

## Revendications

1. Garniture d'étanchéité statique pour moteur à combustion interne, en particulier pour couvercle de fermeture de carter de vilebrequin et de boîte, constitué d'un corps de base en métal ou similaire pourvu de trous pour la réception de vis de fixation ainsi que de cordons d'étanchéité fixés à celui-ci par exemple par vulcanisation ou similaire, ces cordons d'étanchéité étant pourvus sur la face frontale (10) adjacente à la surface de bride (9) du carter (8) d'au moins une nervure faisant saillie axialement dans la direction d'une surface de bride du carter ainsi que d'évidements (11, 16, 17), caractérisée en ce qu'un agent d'étanchéité plastiquement déformable (12) est introduit dans les évidements (11, 16, 17), l'agent d'étanchéité passant d'abord à l'état liquide sous l'influence de la pression et se répartissant sur les surfaces d'étanchéité.

2. Confiture d'étanchéité statique selon la revendication 1, caractérisée en ce que les cordons d'étanchéité (5) présentent pour la formation des évidements (11, 16, 17) sur la face frontale (10) un profil en forme de dents de scie (15) avec au moins une bride latérale (13) s'étendant de manière inclinée et en ce que l'agent d'étanchéité (12) est introduit dans le ou les évidement(s) (11, 16, 17) formés par le profil en dents de scie (15) et la surface de bride (9) du carter (8).

3. Garniture d'étanchéité statique selon la revendication 1 ou 2, caractérisée par l'utilisation de cire en tant qu'agent d'étanchéité.

4. Garniture d'étanchéité statique selon l'une des revendication 1 ou 2, caractérisée par l'utilisation de vernis d'étanchéité en tant qu'agent d'étanchéité.
